# EUROPÄISCHE PATENTSCHRIFT

(11) **EP 2 604 493 B1**
(45) Veröffentlichungstag und Bekanntmachung des Hinweises auf die Patenterteilung: **26.11.2014**
(21) Anmeldenummer: 12195371.5
(22) Anmeldetag: 04.12.2012
(51) Int. Cl.: B62D 33/02, B62D 33/04

(54) **Runge für einen Nutzfahrzeugaufbau**
Stake for a commercial vehicle
Les enjeux pour la construction d'un véhicule commercial

(30) Priorität: 15.12.2011 DE 202011052306 U
(43) Veröffentlichungstag der Anmeldung: 19.06.2013
(73) Patentinhaber: F. HESTERBERG & SÖHNE GmbH & Co. KG, 58256 Ennepetal (DE)
(72) Erfinder: Breme, Stefan, 58339 Breckerfeld (DE)
(74) Vertreter: Bungartz Christophersen Partnerschaft mbB Patentanwälte

(56) Entgegenhaltungen:
- DE-A1-102008 064 217
- DE-B3-102006 004 994
- DE-U1-202011 004 577
- DE-U1-202011 051 598

## Beschreibung

Die Erfindung betrifft eine Runge für einen Nutzfahrzeugaufbau, die mit ihrem unteren Ende gegen ein in Höhe des Fahrzeug-Ladebodens befestigtes Rungenlager verriegelbar ist, und an deren oberem Ende ein Rollapparat für die Horizontalführung der an dem Rollapparat hängenden Runge entlang einer in Dachhöhe des Fahrzeugaufbaus angeordneten Schiene vertikal beweglich angeordnet ist, wobei bei am Rollapparat hängender Runge diese über mindestens eine als Drahtwendel ausgebildete Feder vertikal abgestützt ist, und wobei die Feder mit ihrem ersten Federende gegen eine an einem horizontalen Steg des Rollapparats ausgebildete erste Federstützfläche, und mit ihrem zweiten Federende gegen eine an einem horizontalen Steg der Runge ausgebildete zweite Federstützfläche anliegt.

Eine Runge mit diesen Merkmalen ist aus der DE 10 2008 064 217 A1 und DE2020110515980 bekannt. Bei vom Rungenlager gelöster und daher hängender Runge ist diese über eine Schraubenfeder vertikal gegenüber dem Rollapparat abgestützt. Die Feder dient als Dämpfungselement, durch dessen Einsatz der mit dem unkontrollierten Fallen der Runge verbundene Stoßimpuls soweit abgeschwächt wird, dass es zu keiner Schädigung der dem Stoßimpuls ausgesetzten Rollen des Rollapparats kommen kann, einschließlich der in den Rollen vorhandenen, empfindlichen Wälzlager. Als schwierig, vor allem bei der Fertigung größerer Stückzahlen, hat sich die Montage der als Drahtwendel gestalteten Feder herausgestellt. Diese muss so montiert werden, dass sie sich mit ihrem ersten Federende gegen einen horizontalen Steg des Rollapparats, und mit ihrem zweiten Federende gegen einen horizontalen Steg der Runge abzustützen vermag. Zugleich bedarf der Sitz der Feder einer Zentrierung, wozu im flachen Grundkörper des Rollapparats ein Zapfen ausgebildet ist, welcher von unten her in die Drahtwendel reicht und diese somit zumindest im Bereich des ersten Federendes zentriert. Der Zapfen ist von begrenzter Länge, um die Drahtwendel bei der Montage überhaupt einsetzen zu können. Die Drahtwendel ist daher nicht über ihre gesamte wirksame Länge von innen her zentriert, sondern nur über eine Teillänge. Dies kann nicht nur zu einer unzureichenden Zentrierung führen, sondern auch zu einem Verhaken des Zapfens an einzelnen Federwindungen während der Kompression der Feder.

Der Erfindung liegt die **Aufgabe** zugrunde, bei einer Runge der eingangs genannten Art das Einsetzen der Feder bei der Herstellung der Runge zu vereinfachen, und stets ein zuverlässiges Einfedern der Drahtwendel zu erzielen.

Zur **Lösung** wird bei einer Runge mit den eingangs angegebenen Merkmalen vorgeschlagen, dass in axialer Verlängerung der Wendel zumindest einer der beiden Stege mit einer Öffnung oder Ausnehmung versehen ist, die für ein Hindurchschrauben der Drahtwendel größer als der Drahtquerschnitt der Drahtwendel ist.

Vorteilhaft an dieser Bauweise ist, dass sich die Feder durch einen einfachen Schraubvorgang in Richtung ihrer Federlängsachse in die vorgesehene Einsatzposition zwischen Rollapparat und Teleskopelement der Runge einbauen lässt, was besonders einfach von statten geht und sich zudem auch für eine automatisierte Herstellung besonders eignet. Durch die Montage im Wege einer schraubenden Bewegung ohne seitliche Bewegungskomponenten wird zudem die Voraussetzung dafür geschaffen, die Drahtwendel auf ihrer gesamten Länge zu zentrieren, etwa durch einen die Drahtwendel in Längsrichtung durchdringenden vertikalen Steg von entsprechender Länge. Bei Kompression der Drahtwendel kann es, selbst wenn diese nicht genau zentrisch sitzt, zu keinem Verhaken einzelner Windungen an dem zentrierenden Element kommen.

Mit einer ersten Ausgestaltung wird vorgeschlagen, dass die Drahtwendel mindestens auf dem überwiegenden Teil ihrer Länge eine gleichbleibende Steigung aufweist, und dass diese Steigung bis zu dem der Öffnung bzw. Ausnehmung abgewandten Federende gleich bleibt. Diese Maßnahme ermöglicht die Montage der Drahtwendel durch eine ausschließlich schraubende Bewegung ohne größeren Anfangswiderstand, und insbesondere ohne ein partielles Aufspreizen oder Zusammendrücken des Drahtwendelendes zu Beginn der Montage.

Ein anfängliches partielles Zusammendrücken oder Auseinanderziehen ist auch dadurch entbehrlich, dass gemäß einer Ausgestaltung die Drahtwendel auf dem überwiegenden Teil ihrer Länge eine gleichbleibende Steigung aufweist, und sich die Öffnung bzw. Ausnehmung, in axialer Richtung betrachtet, am Ort einer geometrischen Fortsetzung dieses Wendelverlaufs befindet.

Von Vorteil kann es jedoch sein, wenn sich die Steigung der Drahtwendel zu ihrem der Öffnung bzw. Ausnehmung zugewandten Federende hin ändert. Dies erschwert zwar das Einschrauben der Feder gegen Ende des Montagevorgangs, jedoch wird eine Sicherung gegen ein selbsttätiges Lösen der Feder durch selbsttätiges Herausschrauben erzielt.

Um den horizontalen Steg in axialer Richtung dicker und damit stabiler gestalten zu können, wird mit einer weiteren Ausgestaltung der Runge vorgeschlagen, dass dieser Steg in axialer Verlängerung der Wendel sowohl mit mindestens einer Öffnung, als auch mit einer Ausnehmung versehen ist. In diesem Fall befindet sich sowohl die mindestens eine Öffnung, als auch die Ausnehmung in axialer Richtung am Ort einer geometrischen Fortsetzung des überwiegenden Wendelverlaufs.

Mit einer alternativen Bauweise wird vorgeschlagen, dass die Drahtwendel mindestens auf dem überwiegenden Teil ihrer Länge eine gleichbleibende Steigung aufweist, dass diese Steigung bis zu dem der Öffnung bzw. Ausnehmung zugewandten Federende gleich bleibt, und dass sich die Öffnung bzw. Ausnehmung in axialer Richtung höher oder tiefer als der Ort einer geometrischen Fortsetzung dieses eine gleichbleibende Steigung aufweisenden Wendelverlaufs befindet. Auch durch diese Ausgestaltung wird verhindert, dass sich die Feder versehentlich von selbst aus ihrer Montageposition herausschraubt.

Die den Durchtritt des Drahtquerschnitts der Feder ermöglichende Öffnung bzw. Ausnehmung kann sich z. B. in dem horizontalen Steg des Teleskopelements befinden. Bevorzugt wird hingegen eine Ausgestaltung, bei der sich die Öffnung bzw. Ausnehmung in dem horizontalen Steg des Rollapparats befindet.

Gemäß einer weiteren Ausgestaltung der Runge setzt sich der Rollapparat aus einem flachen Grundkörper und mindestens zwei daran drehgelagerten Rollen zusammen. An dem Grundkörper ist einstückig der horizontale Steg mit der ersten Federstützfläche und, ausgehend von dem horizontalen Steg, ein sich längs der Federachse erstreckender Materialabschnitt ausgebildet, der die Feder von innen her zentriert. Dies ist eine produktionstechnisch zu bevorzugende Variante, da der flache Grundkörper des Rollapparats z. B. als Stanzteil aus Metallblech gefertigt werden kann, an dem sich der Steg sowie der sich auf der Federachse längs erstreckende Materialabschnitt als Folge entsprechender Ausstanzungen ergeben.

Ebenfalls im Hinblick auf die produktionstechnisch einfache Gestaltung als Stanzteil ist es von Vorteil, wenn der sich auf der Federachse erstreckende Materialabschnitt ein Steg ist, der zwei zueinander parallele Schlitze des Grundkörpers trennt, wobei durch jeden Schlitz jeweils eine Hälfte der Drahtwendel hindurchtritt. Zudem ist der sich auf der Federachse erstreckende Materialabschnitt von solcher Länge, dass die Feder auf ihrer gesamten Länge von innen her geführt bzw. zentriert wird, und es nicht an einzelnen Stellen zu einem Verhaken an den Innenflächen einzelner Federwindungen kommen kann.

Gemäß einer weiteren Ausgestaltung der Runge setzt sich diese aus einem Grundelement und einem darin vertikal längsgeführten Teleskopelement zusammen, wobei das Grundelement gegen das Rungenlager verriegelbar ist, und der Rollapparat am oberen Ende des Teleskopelements angeordnet ist. Durch die Bauweise der Runge aus zwei Längselementen lässt sich die wirksame Länge der Runge einstellen, und insbesondere sowohl die minimale als auch die maximale Auszugslänge der Runge fest einstellen.

Weitere Vorteile und Einzelheiten ergeben sich aus der nachfolgenden Beschreibung eines auf der Zeichnung dargestellten Ausführungsbeispiels. Auf der Zeichnung zeigen:
- Fig. 1: ein Nutzfahrzeug mit einem mehrere vertikale Rungen aufweisenden Fahrzeugaufbau;
- Fig. 2: in perspektivischer Darstellung eine der Rungen des Fahrzeugaufbaus;
- Fig. 3: in einer perspektivischen Ansicht von schräg oben die Einzelheit III der Fig. 2, nämlich den oberen Bereich der Runge einschließlich eines dort angeordneten Rollapparats;
- Fig. 4: in einer Seitenansicht den oberen Bereich der Runge, mit einer nur teilweise eingeschraubten Feder;.
- Fig. 5: in einer Seitenansicht den oberen Bereich der Runge mit maximal eingeschraubter Feder;
- Fig. 6: in einer Seitenansicht den oberen Bereich der Runge mit weniger weit eingeschraubter Feder;
- Fig. 7: in einer Seitenansicht den oberen Bereich der Runge mit nochmal weniger weit eingeschraubter Feder;
- Fig. 8: ausschließlich den Rollapparat ohne die Feder.

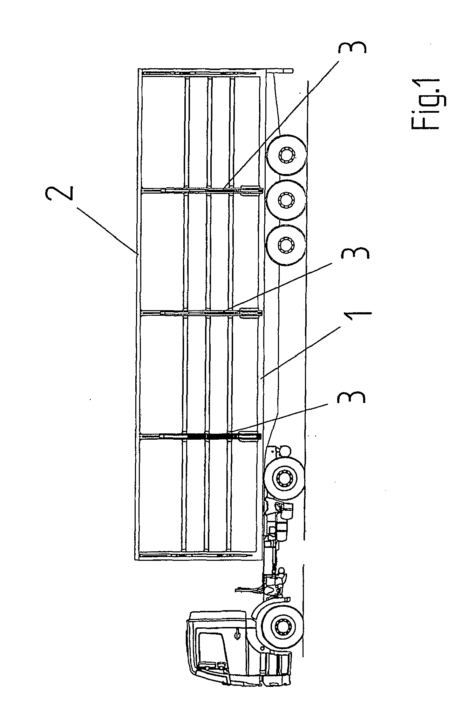

Bei dem Fahrzeugaufbau für ein Nutzfahrzeug nach Fig. 1 sind zu beiden Seiten des Fahrzeugaufbaus Rungen 3 vorgesehen, die mit ihren unteren Enden gegen den Ladeboden 1 des Fahrzeugaufbaus verriegelt sind, und sich mit ihren oberen Enden gegen den Dachaufbau 2 abstützen.

Der Dachaufbau 2 ist zwischen der in Fig. 1 dargestellten Normalstellung und einer das Be- und Entladen erleichternden erhöhten Stellung um einen Dachhöhenverstellbereich verstellbar. Zur Realisierung des Dachhöhenverstellbereichs sind die Rungen 3 längs teleskopierbar, d. h. sie bestehen aus zwei zueinander verschiebbaren Längselementen.

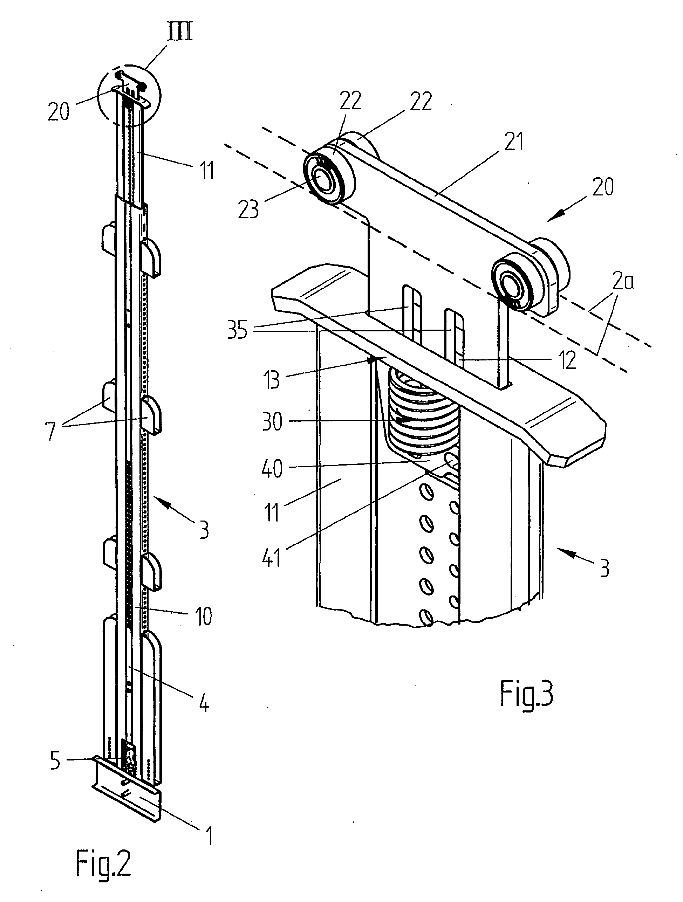

Fig. 2 zeigt eine derartige Runge 3 bei einer mittleren Auszugslänge. Zur Befestigung der Runge 3 ist eine im unteren Teil der Runge angeordnete Verriegelung 4 formschlüssig an einem Rungenhalter 5 verriegelt, welcher seitlich an dem hier nur als Ausschnitt gezeigten Ladeboden 1 befestigt ist. Derartige Verriegelungen 4 sind aus dem Stand der Technik vielfältig bekannt, und werden daher hier nicht näher erläutert.

An ihrem oberen Ende ist die Runge 3 mit einem Rollapparat 20 versehen. Dieser verfügt über kugelgelagerte Rollen 22, die dem Rollapparat ein Rollen entlang einer horizontalen Schiene 2a ermöglichen, die Bestandteil des Dachaufbaus 2 ist. Auf diese Weise lässt sich die Runge 3, nachdem die Verriegelung 4 am Rungenlager 5 gelöst wurde, längs der Schiene 2a und damit in Längsrichtung des Nutzfahrzeugaufbaus verschieben, um so für das Be- und Entladen des Fahrzeugs eine größere Öffnungsbreite zur Verfügung zu haben. So können z. B. sämtliche Rungen einer Fahrzeugseite zusammengeschoben werden, so dass sich eine seitliche Öffnung des Fahrzeugaufbaus über nahezu die gesamte Länge ergibt.

An der Runge 3 können Planlattentaschen 7 befestigt sein, in welche sich entsprechende Planlatten von oben her einstecken lassen.

Die Runge 3 besteht aus zwei Hauptelementen, nämlich einem Grundelement 10, welches auch die Elemente der Verriegelung 4 sowie die Planlattentaschen 7 aufnimmt, sowie einem in Bezug auf das Grundelement 10 längsbeweglichen Teleskopelement 11, welches an seinem oberen Ende mit dem Rollapparat 20 versehen ist. Sowohl Grundelement 10 als auch Teleskopelement 11 bestehen aus Metallprofilen. Das Grundelement 10 weist den etwas größeren Querschnitt auf, so dass das Teleskopelement 11 in dem Grundelement 10 längsbeweglich geführt ist.

Teleskopelement 11 und Grundelement 10 sind zueinander fest einstellbar, um so die wirksame Länge der Runge 3 einzustellen. Hierzu ist das Teleskopelement 11 mit einem geeigneten Lochraster versehen. Durch entsprechende Einstellung an dem Lochraster lassen sich daher sowohl die minimale als auch die maximale Auszugslänge der Runge fest einstellen.

Anhand der weiteren Figuren 3 - 7 werden im Folgenden Einzelheiten des am oberen Ende der Runge 3 befestigten Rollapparats 20 erläutert. Den oberen Abschluss des aus einem Rechteckprofil bestehenden Teleskopelements 11 der Runge bildet eine Querplatte 13 mit einer Grundfläche, die größer als die Querschnittsfläche des Rechteckprofils ist, aus dem das Teleskopelement 11 besteht. Außerdem steht die Querplatte 13 in Fahrzeuglängsrichtung jeweils über das Querschnittsprofil des Rechteckprofils des Teleskopelements über. Vorzugsweise ist die Unterseite 14 der Querplatte 13 stirnseitig an das Rechteckprofil des Teleskopelements angeschweißt.

Der Rollapparat 20 weist einen Grundkörper 21 aus einem flachen Stück Blech und vorzugsweise Metallblech auf. Nahe der Oberkante des Grundkörpers 21 sind die Rollen 22 des Rollapparats mit Drehachse 23 quer zur Ebene des Grundkörpers 21 angeordnet. Für einen verkantungsfreien Lauf entlang der Schiene 2a sind die Rollen 22 jeweils Rollenpaare. Die Rollen 22 sind vorzugsweise mit Wälzlagern versehen, um ein besonders leichtgängiges Fahren der hängenden Runge entlang der Schiene 2a zu ermöglichen.

Die zwei Rollen eines Rollenpaars können für einen verkantungsfreien Lauf entlang der Schiene 2a auf einer gemeinsamen Drehachse 23 drehgelagert sein, die ihrerseits schwenkbeweglich durch eine Durchgangsöffnung im Grundkörper 21 hindurchtritt.

Der flache Grundkörper 21 des Rollapparats 20 ist vertikal von solcher Länge, dass er sich durch die Querplatte 13 hindurch erstreckt, die zu diesem Zweck mit einer entsprechend dimensionierten, schlitzförmigen Öffnung 12 versehen ist. Zwischen dieser Öffnung 12 und dem durchtretenden Grundkörper 21 besteht nur ein geringes Spiel, so dass die schlitzförmige Öffnung den Rollapparat 20 in Längsrichtung der Runge führt.

Um bei einem plötzlichen Fallenlassen der Runge harte Schläge im Bereich der Rollen 22 und der Schiene 2a zu vermeiden und eine gewisse Dämpfung zwischen Rollapparat und Teleskopelement zu erzielen, ist eine zentral angeordnete Feder 30 in Gestalt einer zylindrischen Drahtwendel vorhanden. Die Drahtwendel stützt sich mit ihrem unteren Federende von oben her gegen eine an einem horizontalen Steg des Grundkörpers 21 ausgebildete Federstützfläche 15, und mit ihrem oberen Ende von unten her gegen die als Federstützfläche dienende Unterseite 14 der Querplatte 13. Bei einem stoßweisen Zug des Teleskopelements 11 am Rollapparat 20 kommt es daher zu einer elastischen Stauchung der Feder 30, und damit zu einer materialschonenden Dämpfung der Gewichtsenergie der Runge.

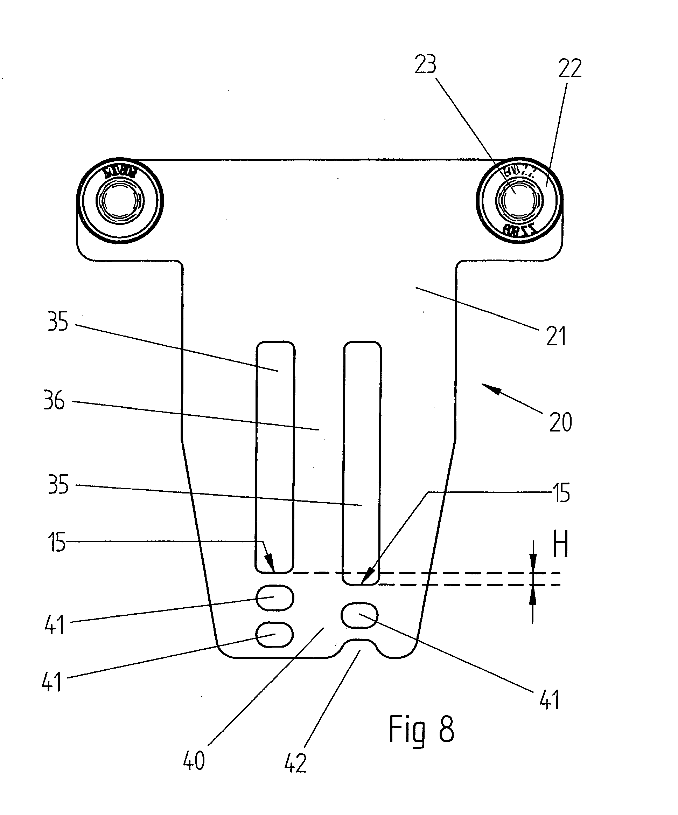

Zur Aufnahme und Lagesicherung der Drahtwendel 30 und zur Bereitstellung der unteren Federstützfläche 15 ist der Grundkörper 21 mit zwei Schlitzen 35 versehen, die sich zueinander parallel beidseitig der senkrechten Mittellinie des Grundkörpers 21 erstrecken. Die Unterkante der Schlitze 35 ist zugleich die Federstützfläche 15, wobei diese, da die zwei Schlitze 35 gemäß Fig. 8 unterschiedlich tief reichen, zweigeteilt ist mit einem Höhenversatz H, der eine halbe Wendelsteigung beträgt.

Zwischen den Schlitzen 35 befindet sich ein Materialabschnitt in Form eines vertikalen Stegs 36, der die zwei Schlitze 35 trennt, wobei durch jeden Schlitz 35 jeweils eine Hälfte der zylindrischen Drahtwendel 30 hindurchtritt. Durch seine Anordnung im Zentrum der Drahtwendel 30 übernimmt der Steg 36 die Ausrichtung bzw. Zentrierung der Feder von innen her. Vorzugsweise ist hierzu die Breite des vertikalen Stegs 36 etwas geringer, als der Innendurchmesser der Drahtwendel 30.

Um bei der Fertigmontage der Runge 3 das Einsetzen der Feder 30 maschinell zu ermöglichen, befinden sich in einem horizontalen Steg 40, der den unteren Rand des Rollapparats 20 bildet, und an dessen Oberseite sich die Federstützflächen 15 für das untere Federende 31 befinden, einzelne Öffnungen 41 und/oder Ausnehmungen 42. Die Öffnungen 41 und Ausnehmungen 42 befinden sich jeweils in solchen Positionen am horizontalen Steg 40, die sich in axialer Verlängerung des Wendelverlaufs der Drahtwendel 30 befinden. Auf diese Weise lässt sich die Feder 30 zwecks ihrer Montage, aber auch zum Entfernen der Feder, durch die Öffnungen bzw. Ausnehmungen hindurchschrauben.

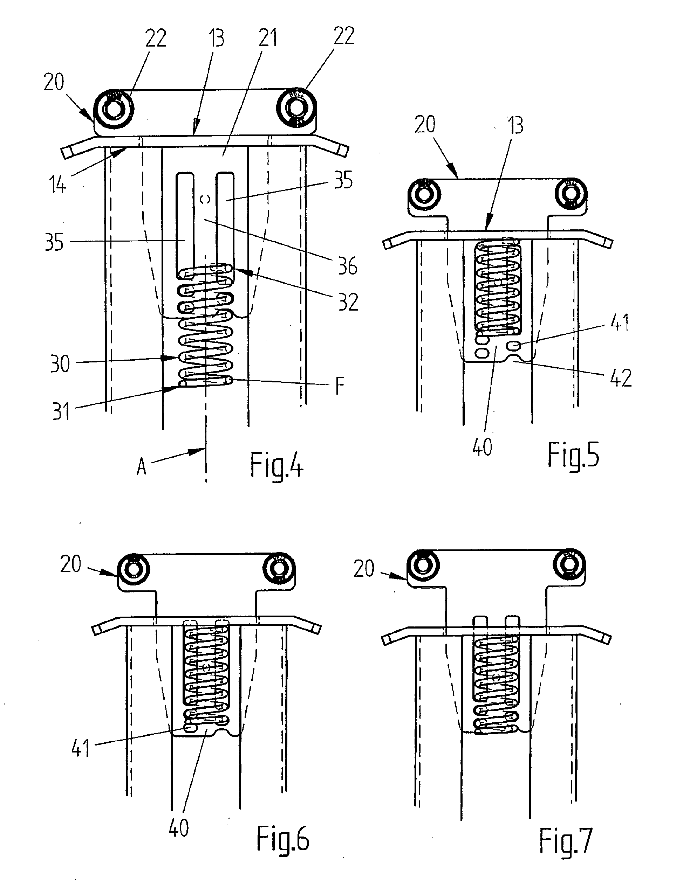

Die Öffnungen 41 bzw. Ausnehmungen 42 müssen für dieses rein axiale Hindurchschrauben der Wendel etwas größer sein, als der Drahtquerschnitt F (Fig. 4) der Wendel ist. Vorzugsweise sind die Öffnungen 41, wie dies vor allem Fig. 5 und Fig. 8 erkennen lässt, oval mit größerer Breite als Höhe.

Vorteilhaft daran ist, dass sich die Feder durch eine einfache Schraubbewegung längs der Federlängsachse A in die vorgesehene Einsatzposition zwischen Rollapparat 20 und Teleskopelement 11 der Runge einbauen lässt. Dies geht besonders einfach von statten, und eignet sich zudem für die automatisierte Herstellung.

Die Montage im Wege einer schraubenden Bewegung ohne seitliche Bewegungskomponenten ist ferner die Voraussetzung dafür, die Drahtwendel 30 mit einfachen Mitteln auf ihrer gesamten Länge von innen her zu zentrieren, nämlich durch den sich über die Gesamtlänge der Drahtwendel 30 erstreckenden, vertikalen Steg 36. Bei Kompression der Drahtwendel 30 kann es, selbst wenn diese nicht genau zentrisch auf der Federlängsachse A sitzt, zu keinem Verhaken der Innenränder einzelner Federwindungen an dem von innen her zentrierenden Element, hier also dem Steg 36, kommen.

Die endenlose, da zwischen den zwei Schlitzen 35 von unten bis oben durchgehende Bauform des Stegs 36 hat zudem den Vorteil, dass sie die Festigkeit des Grundkörpers 21 im Vergleich zu der bekannten Bauart erhöht, bei der nur ein kurzer, frei auslaufender Zapfen das von innen her zentrierende Element für die Feder bildet.

Die Drahtwendel 30 weist auf dem überwiegenden Teil ihrer Länge eine gleichbleibende Steigung auf. Diese Steigung bleibt bis zu dem zweiten Federende 32 unverändert. Dadurch ist die Montage der Drahtwendel durch eine nach oben fortschreitende, ausschließlich schraubende Bewegung und ohne Anfangswiderstand möglich. Ein partielles Aufspreizen oder Zusammendrücken des oberen Federendes 32 zu Beginn der Montage ist nicht notwendig, da bereits zu Beginn des Einschraubens die Ausnehmung 42 und die Öffnungen 41 genau dort sitzen, wo die Federwendel ihren Weg nimmt. Denn die Öffnungen 41 und die Ausnehmung 42 befinden sich, in axialer Richtung betrachtet, am Ort der geometrischen Verlängerung des Wendelverlaufs.

Jedoch ist die Steigung der Drahtwendel 30 zu ihrem anderen, den Öffnungen 41 zugewandten Federende 31 hin verändert, nämlich verringert. Dies erschwert zwar durch erhöhte Reibung das Einschrauben der Feder gegen Ende des Montagevorgangs, jedoch wird so eine Sicherung gegen ein ungewolltes Herausschrauben erzielt. Außerdem wird die Möglichkeit geschaffen, die Vorspannung der Feder 30 in Stufen einzustellen, indem die Feder nicht ganz in den Federraum oberhalb der Stützflächen 15 eingeschraubt wird, sondern das untere Federende 31 mit einer halben Umdrehung (Fig. 5), eineinhalb Umdrehungen (Fig. 6) oder zweieinhalb Umdrehungen (Fig. 7) nach unten über die Federstützflächen 15 des durch die Schlitze 35 gebildeten Federraums hinab ragt. Dies führt zu einer in Stufen gestreckteren, wirksamen Länge der Feder, und damit zu einer von Stufe zu Stufe geringeren Vorspannung. Trotzdem kann sich die Feder 30 nicht von alleine herausschrauben, da das untere Ende der Wendel spätestens nach jeder halben Umdrehung gegen die Flachseite des horizontalen Stegs 40 anstößt und so ein Weiterdrehen verhindert wird.

Damit der horizontale Steg 40 stabil ist, sollte er eine ausreichende vertikale Breite haben. Diese Breite erfordert, dass der Steg 40 mit mehr als nur einer Öffnung 41 versehen ist. Beim Ausführungsbeispiel ist der Steg 40 mit drei Öffnungen 41 und einer nach unten offenen Aussparung 42 versehen, die sich alle, in axialer Richtung betrachtet, an Orten der geometrischen Fortsetzung des Wendelverlaufs befinden.

### Bezugszeichenliste

- 1: Ladeboden
- 2: Dachaufbau
- 2a: Schiene
- 3: Runge
- 4: Verriegelung
- 5: Rungenlager
- 7: Planlattentasche
- 10: Grundelement
- 11: Teleskopelement
- 12: Öffnung
- 13: Querplatte, Steg
- 14: Unterseite, Federstützfläche
- 15: Federstützfläche
- 20: Rollapparat
- 21: Grundkörper des Rollapparats
- 22: Rolle
- 23: Drehachse
- 30: Drahtwendel, Feder
- 31: erstes Federende
- 32: zweites Federende
- 35: Schlitz
- 36: vertikaler Steg
- 40: Steg
- 41: Öffnung
- 42: Ausnehmung

- A: Federlängsachse
- F: Drahtquerschnitt
- H: Höhenversatz

## Patentansprüche

1. Runge für einen Nutzfahrzeugaufbau, die mit ihrem unteren Ende gegen ein in Höhe des Fahrzeug-Ladebodens befestigtes Rungenlager verriegelbar ist, und an deren oberem Ende ein Rollapparat (20) für die Horizontalführung der an dem Rollapparat (20) hängenden Runge (3) entlang einer in Dachhöhe des Fahrzeugaufbaus angeordneten Schiene (2a) vertikal beweglich angeordnet ist, wobei bei am Rollapparat (20) hängender Runge (3) diese über mindestens eine als Drahtwendel (30) ausgebildete Feder vertikal abgestützt ist, und wobei die Feder mit ihrem ersten Federende (31) gegen eine an einem horizontalen Steg (40) des Rollapparats (20) ausgebildete erste Federstützfläche (15), und mit ihrem zweiten Federende (32) gegen eine an einem horizontalen Steg (13) der Runge (3) ausgebildete zweite Federstützfläche (14) anliegt, **dadurch gekennzeichnet, dass** in axialer Verlängerung der Wendel zumindest einer der beiden Stege (40, 13) mit einer Öffnung (41) oder Ausnehmung (42) versehen ist, die für ein Hindurchschrauben der Drahtwendel (30) größer als der Drahtquerschnitt (F) der Drahtwendel (30) ist.

2. Runge nach Anspruch 1, **dadurch gekennzeichnet, dass** die Drahtwendel (30) mindestens auf dem überwiegenden Teil ihrer Länge eine gleichbleibende Steigung aufweist, und dass diese Steigung bis zu dem der Öffnung (41) bzw. Ausnehmung (42) abgewandten Federende (32) gleich bleibt.

3. Runge nach Anspruch 1 oder 2, **dadurch gekennzeichnet, dass** die Drahtwendel (30) auf dem überwiegenden Teil ihrer Länge eine gleichbleibende Steigung aufweist, und dass sich die Öffnung (41) bzw. Ausnehmung (42) in axialer Richtung am Ort einer geometrischen Fortsetzung dieses Wendelverlaufs befindet.

4. Runge nach Anspruch 3, **dadurch gekennzeichnet, dass** sich die Steigung der Drahtwendel (30) zu ihrem der Öffnung (41) bzw. Ausnehmung (42) zugewandten Federende (31) hin ändert.

5. Runge nach einem der Ansprüche 1 - 4, **dadurch gekennzeichnet, dass** der horizontale Steg (40) in axialer Verlängerung der Wendel sowohl mit mindestens einer Öffnung (41), als auch mit einer Ausnehmung (42) versehen ist.

6. Runge nach Anspruch 5, **dadurch gekennzeichnet, dass** sich sowohl die Öffnung (41) als auch die Ausnehmung (42) in axialer Richtung am Ort einer geometrischen Fortsetzung des eine gleichbleibende Steigung aufweisenden Wendelverlaufs befindet.

7. Runge nach Anspruch 1, **dadurch gekennzeichnet, dass** die Drahtwendel (30) mindestens auf dem überwiegenden Teil ihrer Länge eine gleichbleibende Steigung aufweist, dass diese Steigung bis zu dem der Öffnung (41) bzw. Ausnehmung (42) zugewandten Federende (31) gleichbleibt, und dass sich die Öffnung (41) bzw. Ausnehmung (42) in axialer Richtung höher oder tiefer als der Ort einer geometrischen Fortsetzung dieses Wendelverlaufs befindet.

8. Runge nach einem der vorangehenden Ansprüche, **dadurch gekennzeichnet, dass** sich die Öffnung (41) bzw. Ausnehmung (42) in dem horizontalen Steg (40) des Rollapparats (20) befindet.

9. Runge nach einem der vorangehenden Ansprüche, **dadurch gekennzeichnet, dass** sich der Rollapparat (20) aus einem flachen Grundkörper (21) und mindestens zwei daran drehgelagerten Rollen (22) zusammensetzt, und dass an dem Grundkörper einstückig der horizontale Steg (40) mit der ersten Federstützfläche (15) und, ausgehend von dem horizontalen Steg (40), ein sich auf der Federachse (A) längs erstreckender Materialabschnitt (36) ausgebildet ist, der die Feder von innen her zentriert.

10. Runge nach Anspruch 9, **dadurch gekennzeichnet, dass** die erste Federstützfläche (15) zweigeteilt ist, und sie zu beiden Seiten der Federachse (A) auf unterschiedlicher Höhe angeordnet ist.

11. Runge nach Anspruch 9 oder 10, **dadurch gekennzeichnet, dass** der sich auf der Federachse (A) erstreckende Materialabschnitt ein Steg (36) ist, der zwei zueinander parallele Schlitze (35) des Grundkörpers (21) trennt, wobei durch jeden Schlitz (35) jeweils eine Hälfte der Drahtwendel (30) hindurchtritt.

12. Runge nach Anspruch 11, **dadurch gekennzeichnet, dass** beide Schlitze (35) allseitig geschlossene Schlitze sind.

13. Runge nach einem der vorangehenden Ansprüche, **dadurch gekennzeichnet, dass** diese aus einem Grundelement (10) und einem darin vertikal längsgeführten Teleskopelement (11) besteht, wobei das Grundelement (10) gegen das Rungenlager verriegelbar ist, und der Rollapparat (20) am oberen Ende des Teleskopelements (11) angeordnet ist.

## Claims

1. Stanchion for a commercial vehicle body which can be locked by its lower end against a stanchion bearing fastened at the height of the vehicle loading floor, and, at its upper end, a roller apparatus (20) for horizontally guiding the stanchion (3) hanging from the roller apparatus (20) along a rail (2a) arranged at the roof height of the vehicle body is arranged vertically movably, wherein, with the stanchion (3) hanging from the roller apparatus (20), this stanchion is supported vertically via at least one spring formed as a wire coil (30), and wherein the spring bears by its first spring end (31) against a first spring-supporting surface (15) formed on a horizontal web (40) of the roller apparatus (20), and by its second spring end (32) against a second spring-supporting surface (14) formed on a horizontal web (13) of the stanchion (3), **characterized in that**, in the axial extension of the coil, at least one of the two webs (40, 13) is provided with an opening (41) or recess (42) which, for screwing through the wire coil (30), is larger than the wire cross section (F) of the wire coil (30).

2. Stanchion according to Claim 1, **characterized in that** the wire coil (30) has, at least over the predominant part of its length, a uniform gradient, and **in that** this gradient is uniform up to the spring end (32) facing away from the opening (41) or recess (42).

3. Stanchion according to Claim 1 or 2, **characterized in that** the wire coil (30) has, over the predominant part of its length, a uniform gradient, and **in that** the opening (41) or recess (42) is situated in the axial direction at the location of a geometric continuation of this coil profile.

4. Stanchion according to Claim 3, **characterized in that** the gradient of the wire coil (30) changes towards its spring end (31) facing the opening (41) or recess (42).

5. Stanchion according to one of Claims 1-4, **characterized in that** the horizontal web (40) is provided, in the axial extension of the coil, both with at least one opening (41) and with a recess (42).

6. Stanchion according to Claim 5, **characterized in that** both the opening (41) and the recess (42) are situated in the axial direction at the location of a geometric continuation of the coil profile having a uniform gradient.

7. Stanchion according to Claim 1, **characterized in that** the wire coil (30) has, at least over the predominant part of its length, a uniform gradient, **in that** this gradient is uniform up to the spring end (31) facing the opening (41) or recess (42), and **in that** the opening (41) or recess (42) is situated in the axial direction higher or lower than the location of a geometric continuation of this coil profile.

8. Stanchion according to one of the preceding claims, **characterized in that** the opening (41) or recess (42) is situated in the horizontal web (40) of the roller apparatus (20).

9. Stanchion according to one of the preceding claims, **characterized in that** the roller apparatus (20) is composed of a flat basic body (21) and at least two rollers (22) rotatably mounted thereon, and **in that** the horizontal web (40) is formed in one piece with the first spring-supporting surface (15) on the basic body and, starting from the horizontal web (40), a material portion (36) extending longitudinally on the spring axis (A) is formed, which portion centres the spring from the inside.

10. Stanchion according to Claim 9, **characterized in that** the first spring-supporting surface (15) is in two parts, and it is arranged on both sides of the spring axis (A) at different heights.

11. Stanchion according to Claim 9 or 10, **characterized in that** the material portion extending on the spring axis (A) is a web (36) which separates two mutually parallel slots (35) of the basic body (21), wherein in each case a half of the wire coil (30) passes through each slot (35).

12. Stanchion according to Claim 11, **characterized in that** the two slots (35) are slots which are closed on all sides.

13. Stanchion according to one of the preceding claims, **characterized in that** it comprises a basic element (10) and a telescopic element (11) longitudinally guided vertically therein, wherein the basic element (10) can be locked against the stanchion bearing, and the roller apparatus (20) is arranged at the upper end of the telescopic element (11).

## Revendications

1. Rancher pour une carrosserie de véhicule utilitaire, lequel peut être verrouillé par son extrémité inférieure contre un palier de rancher fixé à hauteur du plancher de chargement du véhicule, et à l'extrémité supérieure duquel est disposé de manière mobile verticalement un appareil de roulement (20) pour le guidage horizontal du rancher (3) suspendu à l'appareil de roulement (20) le long d'un rail (2a) disposé à hauteur du toit de la carrosserie de véhicule, et en cas de rancher (3) suspendu à l'appareil de roulement (20), ce rancher étant supporté verticalement par le biais d'au moins un ressort réalisé sous forme de spirale de fil métallique (30), et le ressort s'appliquant, par sa première extrémité de ressort (31), contre une première surface d'appui de ressort (15) réalisée sur une nervure horizontale (40) de l'appareil de roulement (20) et, par sa deuxième extrémité de ressort (32), contre une deuxième surface d'appui de ressort (14) réalisée sur une nervure horizontale (13) du rancher (3), **caractérisé en ce qu'**au moins l'une des deux nervures (40, 13) est pourvue, dans le prolongement axial de la spirale, d'une ouverture (41) ou d'un évidement (42) qui est plus grand(e) que la section transversale de fil métallique (F) de la spirale de fil métallique (30) pour un vissage de la spirale de fil métallique (30) à travers celle-ci/celui-ci.

2. Rancher selon la revendication 1, **caractérisé en ce que** la spirale de fil métallique (30) présente au moins sur la majeure partie de sa longueur un pas constant, et **en ce que** ce pas demeure identique jusqu'à l'extrémité de ressort (32) opposée à l'ouverture (41) ou à l'évidement (42).

3. Rancher selon la revendication 1 ou 2, **caractérisé en ce que** la spirale de fil métallique (30) présente sur la majeure partie de sa longueur un pas constant, et **en ce que** l'ouverture (41) ou l'évidement (42) se situe dans la direction axiale à l'emplacement d'un prolongement géométrique de ce tracé de spirale.

4. Rancher selon la revendication 3, **caractérisé en ce que** le pas de la spirale de fil métallique (30) varie en direction de son extrémité de ressort (31) tournée vers l'ouverture (41) ou l'évidement (42).

5. Rancher selon l'une quelconque des revendications 1 à 4, **caractérisé en ce que** la nervure horizontale (40) est pourvue, dans le prolongement axial de la spirale, à la fois d'au moins une ouverture (41) et d'un évidement (42).

6. Rancher selon la revendication 5, **caractérisé en ce qu'**à la fois l'ouverture (41) et l'évidement (42) se situent dans la direction axiale à l'emplacement d'un prolongement géométrique d'un tracé de spirale présentant un pas constant.

7. Rancher selon la revendication 1, **caractérisé en ce que** la spirale de fil métallique (30) présente au moins sur la majeure partie de sa longueur un pas constant, **en ce que** ce pas demeure identique jusqu'à l'extrémité de ressort (31) tournée vers l'ouverture (41) ou l'évidement (42), et **en ce que** l'ouverture (41) ou l'évidement (42) se trouve plus haut ou plus bas, dans la direction axiale, que l'emplacement d'un prolongement géométrique de ce tracé de spirale.

8. Rancher selon l'une quelconque des revendications précédentes, **caractérisé en ce que** l'ouverture (41) ou l'évidement (42) se trouve dans la nervure horizontale (40) de l'appareil de roulement (20).

9. Rancher selon l'une quelconque des revendications précédentes, **caractérisé en ce que** l'appareil de roulement (20) se compose d'un corps de base plat (21) et d'au moins deux galets (22) montés à rotation sur celui-ci, et **en ce que** sur le corps de base est réalisée d'une seule pièce la nervure horizontale (40) présentant la première surface d'appui de ressort (15) et, à partir de la nervure horizontale (40), une portion de matériau (36) s'étendant longitudinalement sur l'axe de ressort (A) est réalisée, laquelle centre le ressort depuis l'intérieur.

10. Rancher selon la revendication 9, **caractérisé en ce que** la première surface d'appui de ressort (15) est divisée en deux, et elle est disposée à des hauteurs différentes des deux côtés de l'axe de ressort (A).

11. Rancher selon la revendication 9 ou 10, **caractérisé en ce que** la portion de matériau s'étendant sur l'axe de ressort (A) est une nervure (36) qui sépare deux fentes (35) parallèles l'une à l'autre du corps de base (21), une moitié respective de la spirale de fil métallique (30) passant à travers chaque fente (35).

12. Rancher selon la revendication 11, **caractérisé en ce que** les deux fentes (35) sont des fentes fermées de tous côtés.

13. Rancher selon l'une quelconque des revendications précédentes, **caractérisé en ce que** celui-ci est constitué d'un élément de base (10) et d'un élément télescopique (11) guidé longitudinalement verticalement dans celui-ci, l'élément de base (10) pouvant être verrouillé contre le palier de rancher, et l'appareil de roulement (20) étant disposé à l'extrémité supérieure de l'élément télescopique (11).
